# EUROPEAN PATENT SPECIFICATION

(11) **EP 3 227 668 B1**
(45) Date of publication and mention of the grant of the patent: **05.09.2018**
(21) Application number: 16710327.4
(22) Date of filing: 08.02.2016
(51) Int. Cl.: G01N 21/78

(54) **OPTICAL SENSOR DEVICE**
OPTISCHE SENSORVORRICHTUNG
DISPOSITIF DE CAPTEUR OPTIQUE

(43) Date of publication of application: 11.10.2017
(73) Proprietor: PreSens Precision Sensing GmbH, 86633 Neuburg a.d. Donau (DE)
(72) Inventor: RIECHERS, Daniel, 93051 Regensburg (DE); FINDEIS, Michael, 93073 Neutraubling (DE)
(74) Representative: Reichert & Lindner Partnerschaft Patentanwälte
(86) International application number: PCT/IB2016/050643
(87) International publication number: WO 2017/137798

(56) References cited:
- DE-B3-102013 108 659
- US-A1- 2006 257 094
- US-A1- 2013 109 040
- US-A1- 2015 068 898
- US-A1- 2015 068 898
- US-B1- 6 256 522
- XU WEI ET AL: "Simultaneous color sensing of O2and pH using a smartphone", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, vol. 220, 4 June 2015 (2015-06-04), pages 326-330, XP029263608, ISSN: 0925-4005, DOI: 10.1016/J.SNB.2015.05.088

## Description

The invention relates to a sensor device for measuring at least one first analyte and a second analyte by optical means. In particular, the sensor device contains at least one first dye and a second dye, and the dyes have a respective optical behaviour that depends on the at least one first analyte and second analyte, respectively.
The German published patent application DE 10 2014 112 972 A1 discloses a sensor and a membrane therefor. The membrane includes a sensor element having at least one functional layer with a sensor-specific substance. The sensor-specific substance can be such that contact with an analyte to be measured changes the chemical or physical properties of the sensor-specific substance. The sensor-specific substance may for example be a phosphorescent dye or an indicator dye. The sensor element may be a multilayer structure having at least two sensor components, examples of which are a polymer layer with encapsulated pigments, a light-blocking layer, and a pH-buffer layer. The German translation DE 601 28 279 T2 of European patent EP 1 130 382 B1 discloses an arrangement of sensors for measuring plural analytes, wherein a processor is provided for signal processing, in order to determine the concentration of the respective analytes despite adverse interaction between the sensors.
The German published patent application DE 10 2014 103 721 A1 discloses an optical sensor for measuring concentrations. The sensor has a sensitive element in a sensor head, and electronic components, separated from the sensor head. An optical fibre is connecting the sensor head and the electronic components. The optical sensor furthermore comprises a thermal sensor in close vicinity of the sensitive element.
The US patent US 4,270,091 discloses an apparatus for monitoring plural gases simultaneously by the use of plural filters of different transmission and a separate detector for each filter. Alternatively, plural gases can be monitored sequentially by plural filters selectively insertable between the excitation source and a single detector.

US patent application 13/809,318, published as US 2013/0109040 A1, discusses an in vitro sensor for detection of at least one analyte. The sensor comprises an analyte-detection optode membrane, an analyte-permeable membrane, and a plurality of microbeads. The analyte-permeable membrane covers the optode membrane, which is arranged in a cavity formed in a substrate. The sensor can comprise plural such optode membranes in respective cavities. The microbeads, arranged for example in the optode membrane or the analyte permeable membrane, facilitate diffuse reflectance, for example by filtering out the colour of an underlying biological fluid sample.

US patent US 6,256,522 B1, issued on patent application US 08/516,257, refers to a sensor capsule containing at least one dye used to measure a corresponding analyte. The wall of the capsule is formed by a membrane permeable to the analyte. The capsule is intended to be implanted under the skin of a patient. As an alternative to a capsule design, also a polymer-gel structure with corresponding reporter molecules on its outside is disclosed.

German patent DE 10 2013 108 659 B3 discloses a sensor, for example embodied as a membrane, holding a medium containing a dye which exhibits an optical behaviour dependent on an analyte. The sensor also has a restriction means to mechanically restrict a change of volume of the medium. An osmolality in the medium is set to a value greater than a maximum osmolality of a sample for which the sensor is intended. The cooperation of the restriction means and the set osmolality in the medium result in a reduced cross-sensitivity of the sensor to osmolality.

The article "Simultaneous color sensing of O2 and pH using a smartphone" by Xu Wei et al., Sensors and Actuators B: Chemical, International Journal Devoted to Research and Development of Physical and Chemical Transducers, vol. 220, 4 June 2015, pages 326-330, discloses a method for measuring both O2 and pH by recording and analysing, with a smartphone, a colour image of a sensor film, in which a dye sensitive to oxygen is immobilised and to which a pH-sensitive dye has been covalently bonded.

Many different methods of conducting measurements for determining, using optical sensors, the concentration or the partial pressure of a substance, such a substance then being also referred to as an analyte, are well known. Examples, which in no way should be construed to be limiting, can be found in the international application PCT/EP2012/070552, published as WO 2013/068215 A1, or in the international application PCT/IB2014/063765, published as WO 2015/025243 A1, or European patent EP 1 000 345 B1 on European patent application EP 98945125.7, as well as in references cited therein. Such methods can also be employed with the sensor device according to the invention.

Correspondingly known are many kinds of optical sensors, which differ in their chemical composition, the optical behaviour they show, and the way the targeted analyte affects this optical behaviour. Examples can also be found in the references just cited.

The sensors this application relates to include a substance, also referred to as a dye, which shows the optical behaviour used in measuring an analyte, which means determining a concentration of the analyte, for example, if the analyte is a substance in a solution, or determining a partial pressure of the analyte, usually if the analyte is a gas in a mixture of gases or in a liquid medium. Determining a concentration, or partial pressure, of the analyte includes determining, within defined error bounds, a value for the concentration, or partial pressure, respectively, but also includes only determining that a value for concentration, or partial pressure, is within a given range; this range may have an upper bound and a lower bound, or only just an upper bound or just a lower bound.

The optical behaviour of the dye, depending on an analyte and thus used for measuring this analyte, can for example include reflectivity, absorption or colour of the dye, and can as further example include luminescence, luminescence comprising at least fluorescence and phosphorescence. This means that in these respective cases, in dependence on the concentration or partial pressure of the analyte, the coefficients of reflection or absorption of the dye for light of a given wavelength change, or that the colour of the dye changes, which can be quantitatively determined by known colorimetric methods, or that the luminescence behaviour of the dye changes. The latter means that a luminescence effect the dye shows in reaction to excitation, for example excitation by light in a particular wavelength region, changes. The change can for example be a change of the intensity and / or wavelength of the luminescence light, or a change of a decay time of the luminescence. The decay can for example be a decay of intensity or the degree of polarization of the luminescence.

These sensors, when used in specific applications or measurement settings, can come in, and are commercialized in, many different shapes, for example as sensor spots or sensor patches. A further mode of use is as part of a probe inserted via dedicated ports into vessels, for example bio-reactors. The use of dedicated ports is in particular advisable if the measurements, or the processes to be monitored by the measurements, have to be carried out in a sterile and / or decontaminated environment. While a vast number of different bio-reactors is available on the market, these bio-reactors usually exhibit only a small number of ports, if compared with the number of quantities of interest in the processes taking place within the bio-reactors, and the corresponding number of sensors that have to be placed into the bio-reactor. The number of quantities of interest has strongly increased over the past 15 years or so, a tendency which still prevails. While bio-reactors are a prominent example, the need for monitoring a large number of quantities, in particular concentrations or partial pressures of various substances, can also arise in different settings, implying that the present invention is not limited to application in bio-reactors.

It therefore is an object of the invention to provide a sensor device capable of measuring plural analytes, while, if used in vessels via dedicated ports, only requiring a single port. Moreover, effects of sensor poisoning should be avoided.

This object is achieved by a sensor device according to claim 1.

The sensor device according to the invention has a cavity in which a buffer, more particularly a pH-buffer solution, is contained. A membrane limits the cavity at least on one side of the cavity. The membrane includes at least one first dye. Each of the at least one first dye exhibits an optical behaviour which depends on a respective first analyte. As a result of this dependence, each of the at least one first dye can be employed in measuring a respective first analyte.

Furthermore, a second dye is mixed with the buffer. The second dye exhibits an optical behaviour which depends on the pH-value in the buffer, wherein the pH-value in the buffer in turn depends on a second analyte. Via this dependence, the second analyte affecting the pH-value in the buffer, the pH-value in the buffer affecting the optical behaviour of the second dye, the second analyte can be measured.

Therefore, the sensor device according to the invention can measure not only at least one first analyte, but also a second analyte. This, in particular, also, if the optical behaviours of the dyes available for measuring the at least one first and the second analyte are affected via different transduction principles by the respective analytes. An analyte affecting the pH-value of a buffer can be measured as the second analyte, in the above terminology, by a pH-sensitive second dye mixed with the buffer, while further analytes, even if they do not suitably affect a pH-value of a buffer, can be measured via suitable dyes in the membrane. As the membrane is at the same time used to limit the cavity, at least on one side, thus preventing the buffer with the second dye from escaping from the cavity at this at least one side, the dyes can easily be combined into a single sensor device.

An example of a transduction principle not involving a pH-value is non-radiative energy transfer from a dye to an analyte. For instance, a luminescent dye, elevated into an excited state by absorbing energy in form of excitation light, may release energy as luminescence light. If, as a further channel for energy release, the dye can also transfer energy to the analyte in a non-radiative way, the luminescence behaviour of the dye changes in presence of the analyte. Often the decay time of the luminescence is used for measuring the analyte. If there is an additional channel for the dye to release energy, the luminescence will decay faster. In the case of non-radiative transfer of energy to the analyte, the luminescence will decay the faster the higher the number of analyte molecules that can interact with the dye, i.e. the higher the concentration or partial pressure of the analyte. This and further transduction principles are well known in the art.

A general requirement for the sensor device to function properly is that the at least one first analyte and the second analyte reach the respective dyes provided to change their optical behaviour in reaction to the respective analyte. When measuring, the membrane is brought into contact with a medium containing the analytes to be measured. The membrane must be of such configuration that the analytes can enter the membrane, that each of the at least one first analyte can reach the respective one of the at least one first dye within the membrane, and such that at least the second analyte can pass through the membrane and reach the second dye in the cavity. The analytes enter in and pass through the membrane usually by diffusion. When this paragraph speaks of an analyte reaching a dye, what is meant is that the analyte reaches a part of the sensor device where it can interact with the at least one first dye or the second dye in such a way that the optical behaviour of the respective dye can be affected by the corresponding analyte. This interaction between the dye and the respective analyte may be a direct interaction between dye and analyte, or an indirect interaction. An example of an indirect interaction is the above described case of the second dye, where the second analyte changes the pH-value of a buffer, and the second dye reacts to the change of the pH-value. An example of a direct interaction is the above described non-radiative energy transfer from the dye to the analyte. Although the analytes must be able to enter into the membrane, the membrane may in particular be hydrophobic and impermeable to ions, in order to protect the composition of the buffer-dye mixture in the cavity and also the at least one first dye in the membrane from unwanted exposure to the medium.

According to the invention, the sensor device includes a reservoir of the buffer and second dye, wherein the reservoir is in diffusive contact with the cavity. In sensors based on the cooperation of a buffer and a dye, as is the case for the second dye in the present invention, the chemical composition of the buffer, its osmolality, the pKa-values of buffer and dye, as well as their concentrations are chosen according to the desired target analyte and the desired range of sensitivity. A disadvantage of such sensors, for example in bio-technological processes, is the "poisoning" of the sensor. "Poisoning" of a sensor refers to substances other than the target analyte entering the sensor, in particular the buffer, and changing the chemical conditions there, so that the buffer and the dye, when used for a measurement, no longer operate at the intended conditions, for example the conditions at which calibration of the sensor was performed. This leads to measurement errors and therefore should be avoided. The effect accumulates over time, reducing the lifetime of the sensor. The reservoir of buffer and second dye is provided to counter the sensor poisoning. Substances other than the target analyte entering the cavity can be removed from the cavity into the reservoir by diffusion, while, also by diffusion, fresh buffer and second dye are supplied to the cavity from the reservoir.

In an embodiment, the cavity is limited by a transparent element on a side of the cavity on which the cavity is not limited by the membrane. In this way the cavity is limited on one side by the membrane and on a further side by the transparent element. In this context, "transparent" means that at least light of wavelengths that are used in measurements with the sensor device is transmitted through the transparent element at at least 50% intensity, typically with over 90% intensity. This includes at least the wavelengths of light emitted from a light source for excitation light; such a light source in embodiments may form part of the sensor device. It includes further the wavelengths associated with the optical behaviour of the at least one first and the second dye in the sensor device, for example the wavelengths of the luminescence light in case the optical behaviour is a luminescence phenomenon. The transparent element may of course exhibit a high transmission, above 50% or above 90%, for example, for a wider range of wavelengths. The transparent element may for example be made of a glass or a plastic. Apart from limiting the cavity on one side, the transparent element may also function as a window for excitation light to impinge on the at least one first dye and the second dye in the sensor element, and/or as window for light from the at least one first dye and the second dye in the sensor element, i.e. for light emitted by or having interacted with at least one of the at least one first dye or the second dye. The transparent element may furthermore be shaped so as to shape the light passing through it, for example, the transparent element may be shaped like, and also function as, a lens.

In an embodiment, the reservoir is of annular shape. The reservoir may in particular be attached to the cavity in such a way that light propagating towards the dyes as well as in the reverse direction passes through an area surrounded by the annular reservoir. With an annular reservoir it is possible to counter sensor poisoning throughout the cavity in a more homogeneous fashion than would be possible with a reservoir in diffusive contact with the cavity only at one location. The reservoir may be at least partially surrounded by an opaque layer. An opaque layer protects the content of the reservoir, in particular the second dye, from light, especially from light used for excitation of the second dye in the cavity. As some dyes tend to be destroyed with increasing exposure to light, fully or partially surrounding the reservoir with an opaque layer contributes to an increased lifetime of the sensor.

An opaque layer fully or partially surrounding the reservoir may also be arranged so as to shield any detection system for light from the first dye and / or for light from the second dye against light from within the reservoir. Due to the dimensions of the reservoir, which normally is of larger volume than the cavity, the second analyte will typically take longer to diffuse through the reservoir than through the cavity. This implies that buffer and second dye within the reservoir, considered as a whole, show a slower response to the second analyte, especially a slower response to changes in concentration or partial pressure of the second analyte, than the buffer and second dye in the cavity. Capturing also light from within the reservoir with the above mentioned detection system therefore would lead to a strong hysteresis of the sensor signal. Such a hysteresis is advantageously avoided by the opaque layer. In case the reservoir is protected against excitation light by the opaque layer, there will be no light from within the reservoir against which the detection system needs to be shielded; in this case a strong hysteresis of the sensor signal is avoided as well.

An annular reservoir at least partially surrounded by an opaque layer and attached to the cavity in such a way that light propagating towards the dyes as well as in the reverse direction passes through an area surrounded by the annular reservoir can in addition function as a collimator, contributing to a better controlled propagation of light within the sensor device.

In an embodiment the sensor device includes an optics section, arranged to receive light from the at least one first dye and the second dye. For each of the at least one first dye, the optics section includes a dichroic mirror and an associated photodetector. Each dichroic mirror is provided to direct light from the corresponding first dye to the associated photodetector. The optics section in this embodiment furthermore includes a dichroic mirror and an associated photodetector for the second dye; this dichroic mirror is provided to direct light from the second dye to the associated photodetector.

In an embodiment, the optics section includes a beam splitter and an associated photodetector for generating a reference signal for a light source. The light source is provided for generating the excitation light used in measurements with the sensor device. The light source may be an external light source or a light source integrated into the sensor device. The beam splitter directs a part of the light generated by the light source to the associated photodetector, for monitoring the intensity of the light sent towards the dyes from the light source. The beam splitter may in particular be configured to direct 0.5% to 6% of the light intensity impinging on it from the light source to the associated photodetector, while letting the remaining light pass on towards the dyes.

In an embodiment, an optical waveguide is provided for guiding light from the optics section towards the at least one first dye and the second dye. Alternatively or additionally, the optical wave guide may be used for guiding light emitted from or having interacted with at least one of the at least one first dye to the optics section, e.g. luminescence light emitted from at least one first dye or light reflected or scattered from at least one first dye. In the same manner, the optical waveguide may guide light emitted from or having interacted with the second dye to the optics section. The reservoir of the sensor device may be arranged around the optical waveguide, or, put differently, the optical waveguide may pass through the reservoir.

In embodiments, in addition to an optics section as described above, the sensor device includes a control and evaluation section for controlling the optics section and processing signals received from the photodetectors of the optics section. Processing the signals from the photodetectors may in particular include converting the signals into any desired data format, in particular a digital data format, for communicating the signals received from the photodetectors, which in particular represent light intensity received by the photodetectors, to an external device.

In an embodiment of the sensor device, the control and evaluation section, the optics section, and the cavity are contained in a common housing. The housing is closed on one side by the membrane. The housing may in particular be provided with means for connecting the sensor device to a port provided in a vessel. The vessel may for example be a bio-reactor. The port in the vessel mechanically fixes the housing, the side of the housing closed with the membrane pointing towards the interior of the vessel. The housing may also be provided with an interface serving as a connection for a power supply of the sensor device and / or for communication between the sensor device and an external device. The external device may for example be a process control unit, controlling operation of the sensor device, or a data logging device, without being limited thereto. In particular, signals processed by the control and evaluation section may be communicated to the external device via the interface. A further possibility is that calibration data for the sensor device are transferred via the interface to a memory forming part of the control and evaluation section. In particular, a portion of the calibration data required for the signal processing performed by the control and evaluation section may be communicated via the interface to the memory forming part of the control and evaluation section, while a portion of the calibration data required for the further processing of the data received from the sensor device by an external device may be stored in the external device.

In an embodiment of the sensor device, a portion including the cavity with the membrane is detachable from the optics section. In this case, the cavity will usually be closed on one side by a transparent element, which remains at the cavity when the portion including the cavity is detached from the optics section. The reservoir may be detached along with the portion including the cavity, to which it remains connected. Additionally or alternatively, the control and evaluation section may be detachable from the optics section. In this way, if one of the portions of the sensor device, i.e. the control and evaluation section, or the optics section, or the portion including the cavity with the membrane fails, it is sufficient to replace the failed portion, making maintenance of the sensor device more economical and, due to the modular structure provided by the portions, also easier. Furthermore, the modular structure also allows quick and easy assembling of a sensor device suitable for a specific measurement application by combining an adequate membrane and cavity portion with a suitable optics section and a suitable control and evaluation section.

For embodiments, in particular, but not only, those of modular structure just mentioned, it is conceivable that a user of the sensor device is provided calibration data along with the portion including the cavity with the membrane, by, for example, the manufacturer or retailer of the sensor device. The user can communicate the calibration data, or a relevant portion thereof, to the sensor device via the interface, as described above. The calibration data may be provided in any suitable form, for example as clear text, barcode, as data file on a storage medium, like for example a USB stick or a flash card, or via download from a data network. The calibration data may be transferred to the sensor device via the interface using any suitable means, like personal computer, tablet, smartphone, by wired or wireless connection. It may also be possible to connect the storage medium, like USB stick or flash card, directly to the sensor device.

The at least one first dye in the membrane may be contained in the membrane in various forms. For example, the at least one first dye can be distributed homogeneously in the membrane or in a layer of the membrane. The at least one first dye also may, within the membrane, be enclosed in hollow particles. In case of more than one first dye, there may be plural types of hollow particles, one type of hollow particle per first dye. A hollow particle containing a dye may contain further substances for establishing a chemical environment required by the dye for proper operation in measurements. A hollow particle may for example contain a buffer in addition to the dye. This buffer may be different from the buffer in the cavity. The hollow particles have a shell enclosing the interior of the particle; the hollow particles may in particular be micelles.

Alternatively, the at least one first dye may be contained within pores in the membrane. As a further alternative, carrier particles may be dispersed in the membrane, and the at least one first dye is absorbed or dissolved in the carrier particles or adsorbed to the carrier particles. Just as in the case of hollow particles, if there is more than one first dye, there may be plural types of carrier particles, one type of carrier particle per first dye. Yet another alternative is that the at least one first dye itself forms particles within the membrane.

In addition, combinations of the above possibilities may be used. For example, one dye may be enclosed in hollow particles, while another dye is absorbed in carrier particles.

In the sensor device according to the invention, the membrane limits the cavity. This means that there is one side of the membrane facing the cavity, and a side of the membrane facing away from the cavity. In an advantageous embodiment, the side of the membrane facing away from the cavity is opaque. This prevents light directed towards the dyes from escaping from the sensor device and entering a medium containing the analytes to be measured. In this way problems arising from the unintended effects of this light in the medium are avoided, like the unintended excitation of luminescent substances that may be present in the medium. A related problem, equally avoided, is that light from one sensor device disturbs the operation of a further sensor device used at the same time in the medium. The further sensor device may be a sensor device according to the invention or may be of a different type. Furthermore avoided is that any light from outside the sensor device enters the sensor device through the membrane. In particular, if used in combination with an opaque housing, an opaque membrane as described above ensures that only light from the dyes in the sensor device reaches the optics section.

In an embodiment the cavity contains a spacer element. The spacer element may for example be a porous and at least semi-transparent mat or mesh, woven or non-woven, of, for example, cellulose, plastic, or stainless steel. The spacer element, in embodiments, can be used to guarantee a defined distance between the transparent element limiting the cavity and the side of the cavity opposite the transparent element during assembly of the sensor device. Furthermore, the spacer element influences diffusion through the cavity, and therefore also through the spacer element itself, in particular diffusion of buffer and second dye. For reducing the effects of sensor poisoning mentioned above and at the same time allowing a proper function of the sensor device for measurement of the second analyte, the membrane and the spacer element in embodiments are selected in such a way that the diffusion coefficient for the diffusion of the second analyte through the membrane is higher by a factor of 10 to 100 than the diffusion coefficient of the buffer and the second dye in the cavity through the spacer element. The second analyte must be able to change the pH-value of the buffer in the cavity sufficiently for performing measurements of the second analyte with the desired accuracy, which would be difficult or impossible, if changes of the pH-value in the cavity were equilibrated by a fast diffusion process of fresh buffer and second dye from the reservoir into the cavity and through the cavity.

The membrane, in embodiments, has a layered structure, including a mesh sandwiched between two fluoropolymer films. A non-limiting example of a fluoropolymer is polytetrafluoroethylene (PTFE). Additionally, the mesh between the fluoropolymer films may be embedded in silicone.

Below, the invention and its advantages will be further illustrated by specific embodiments and with reference to the accompanying figures.
- Figure 1: shows a schematic representation of a simple example of a sensor device.
- Figure 2: shows a schematic representation of an embodiment of the sensor device according to the invention including a reservoir for buffer and second dye.
- Figure 3: schematically illustrates a further embodiment of a sensor device according to the invention including a reservoir for buffer and second dye.
- Figure 4: illustrates how the sensor device shown in Fig. 3 is assembled.
- Figure 5: shows a schematic top view of the sensor device according to Fig. 3.
- Figure 6: shows a schematic cross section of a membrane for a sensor device according to the invention.
- Figure 7: shows an assembly which can either be used as a variant of the sensor device shown in Fig. 1, or as part of a sensor device according to the invention as shown in Fig. 8.
- Figure 8: shows a sensor device according to the invention with an optics section and a control and evaluation section.
- Figure 9: shows an enlarged view of the tip of the sensor device shown in Fig. 8.
- Figure 10: shows a schematic representation of a sensor device according to the invention, the sensor device being of modular configuration.
- Figure 11: shows a sensor device according to the invention in a vessel and connected to an external device.

The elements shown in the figures are not necessarily shown to scale. In particular, some elements have been shown enlarged with respect to other elements for reasons of better illustration of the invention. Like elements in the various figures, as well as elements having like functions, are referred to with the same reference signs.

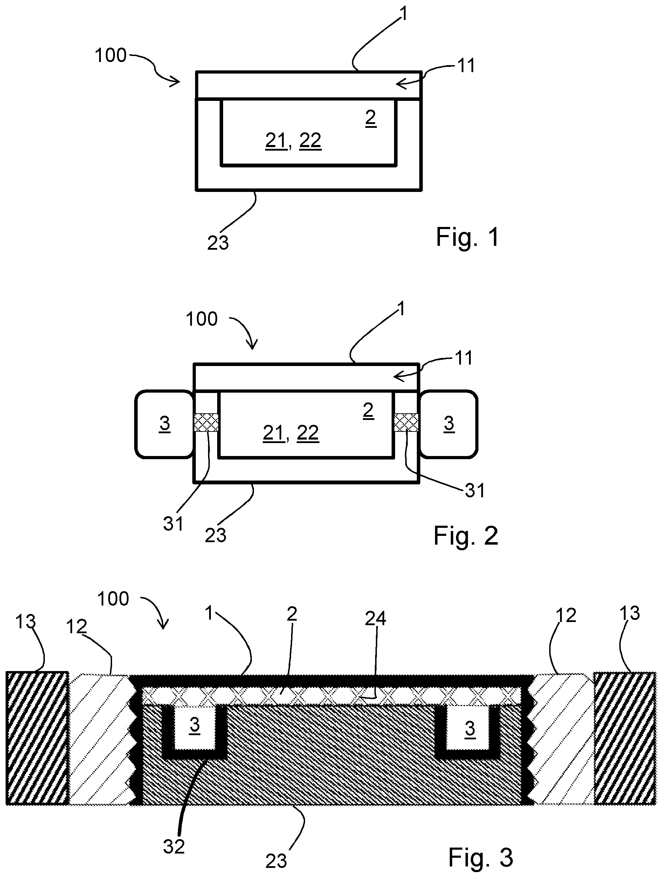

**Fig. 1** is a schematic representation illustrating the basic setup of an example of a sensor device 100. A membrane 1 is limiting a cavity 2 at least on one side of the cavity 2. The membrane 1 contains at least one first dye 11. The first dye 11, as has been mentioned above, may be distributed homogeneously in the membrane or a layer thereof, or may be distributed inhomogeneously, in or at particles contained in the membrane 1. The cavity 2 contains a buffer 21 and a second dye 22 mixed with the buffer 21. The buffer 21 is a pH-buffer solution. The cavity 2 is also limited by a transparent element 23, on a side of the cavity 2 not limited by the membrane 1. In the example shown, the cavity 2 is formed in the transparent element 23, which surrounds the cavity 2 on all sides but one, and this remaining side is limited by the membrane 1.

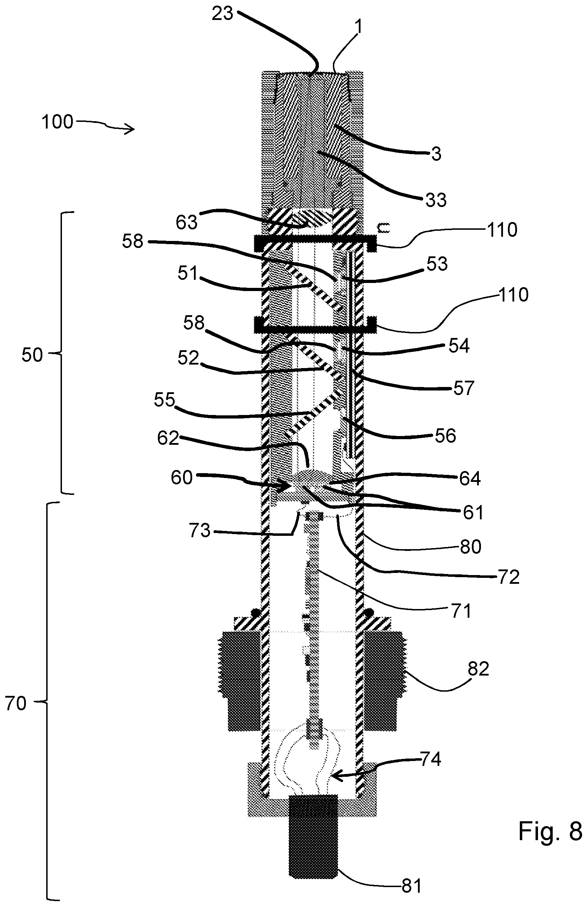

When measuring at least one first analyte and a second analyte in a medium, the membrane 1 is brought into contact with the medium, the at least one first analyte and the second analyte enter the membrane 1 by diffusion and subsequently at least the second analyte passes from the membrane 1 into the cavity 2 by diffusion. The at least one first analyte affects an optical behaviour of a corresponding at least one first dye 11 in the membrane 1, and the second analyte affects an optical behaviour of the second dye 22 in the cavity 2 via a change of the pH-value of the buffer 21. The optical behaviour of the at least one first dye 11 and the second dye 22 can be monitored by shining light through the transparent element 23 on the at least one first dye 11 and the second dye 22, as a result of which light emitted from or having interacted with at least one of the at least one first dye 11 or the second dye 22 can pass through the transparent element 23 to be registered for evaluation by adequate means. Such means are not shown here. Neither need such means form part of a sensor device according to the invention; however, some embodiments, for example the embodiment shown in Fig. 8, do include such means.

The sensor device 100 may for example be used to detect gases like sulphur dioxide (SO₂), ammonia (NH₃), oxygen (O₂), or carbon dioxide (CO₂). For the detection of oxygen, for example, platinum octaethylporphyrin may be used as a first dye, attached to polystyrene nanoparticles embedded in the membrane. An example of a second dye is hydroxypyrenetrisulfonic acid, and it may be employed in a bicarbonate buffer for the detection of carbon dioxide. Another example for a buffer may be a solution of sodium bisulfate. For setting a desired osmolality in the buffer, for example sodium sulfate may be used. Neither this example nor the invention is limited to the dyes, buffers, and osmolality setting additives just mentioned. Further examples of suitable dyes, and, where applicable, adequate buffers to be used with the dyes, as well as of additives suitable for setting a desired osmolality in a respective buffer, are known in the art for measuring a wide range of analytes.

**Fig. 2** schematically shows an embodiment of a sensor device 100 according to the invention; it is largely identical to the example of a sensor device shown in Fig. 1, where most elements shown in Fig. 2 also occur and have been described. The embodiment of Fig. 2, according to the invention, has a reservoir 3 containing a mixture of buffer 21 and second dye 22, just as in the cavity 2. In the specific embodiment of Fig. 2, the reservoir 3 has the form of a ring surrounding the further elements of the sensor device 100. The walls of the cavity 2, in this embodiment formed by the transparent element 23, exhibit diffusion portions 31, through which a diffusive contact between the reservoir 3 and the cavity 2 is established. The diffusion portions 31, without being limited thereto, may comprise a plurality of small holes formed in the walls of the cavity 2, or one or plural channels in the walls of the cavity, the channels filled with a porous or fibrous matter, or with a mesh.

**Fig. 3** illustrates a further embodiment of the sensor device 100 according to the invention. The transparent element 23 here is a plastic disc, preferentially chemically inert, so as to avoid detrimental effects of the chemistry in the sensor device 100 or in a medium where the sensor device 100 is used for measurements on the sensor device 100. Advantageously, the plastic disc is chosen such that its material does not deteriorate when exposed to light of wavelength and intensity ranges as used in measurements. Non-limiting examples of such materials are polysulphone, polyether sulphone, polystyrene, cyclic olefin copolymers (COCs).

The reservoir 3 here is formed as an annular recess in the transparent element 23. The reservoir 3 is partially covered with an opaque layer 32. The opaque layer 32 prevents the contents of the reservoir 3, i.e. buffer and second dye (not indicated here), from undesired exposure to light, thus increasing the lifetime of the sensor device 100 and preventing a strong hysteresis of the sensor signal, as has already been discussed above. The cavity 2 contains a spacer element 24, which at the same time limits the reservoir 3 in such a way that the reservoir 3 remains in diffusive contact with the cavity 2. The spacer element 24, in addition to examples mentioned elsewhere in the application, may for example be a woven or non-woven steel or nylon mesh or PETE-mesh, these examples being independent of the specific embodiment of the sensor device 100. In the embodiment shown here, the spacer element 24 also maintains a defined distance between the membrane 1 and the transparent element 23. The spacer element 24 is at least semi-transparent to light of wavelengths used in measurements with the sensor device, letting pass at least 40% of light intensity at any such wavelength, but may of course also be transparent in the sense defined above. The membrane 1 is covering the spacer element 24 and thus the cavity 2, and is held in place by jagged fixing ring 12 pressed against the membrane 1 by clamping ring 13.

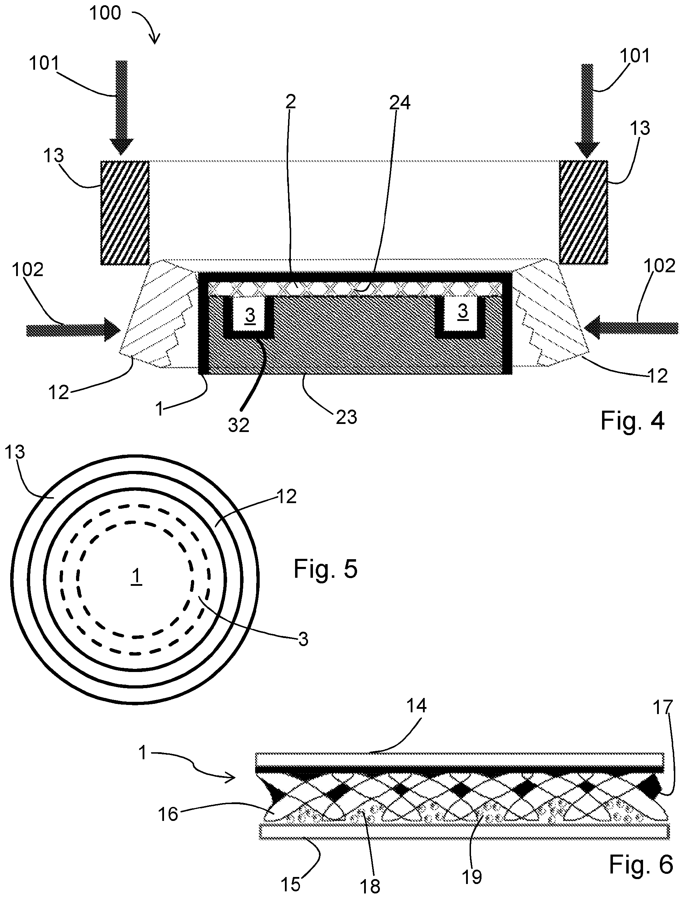

**Fig. 4** shows the assembly of the sensor device 100 shown in Fig. 3. The elements of the sensor device 100 have already been discussed in the context of Fig. 3. The spacer element 24, soaked with buffer and second dye, is placed on the transparent element 23 and covered with membrane 1. The fixing ring 12 is brought into contact with the membrane 1 as shown. By pushing the clamping ring 13 over the fixing ring 12 in direction of arrows 101, the fixing ring 12 is pressed against the membrane 1 and the transparent element 23 as indicated by arrows 102. The clamping ring 13 and fixing ring 12 thus lock the membrane 1 in place against the transparent element 23, in this way also stabilizing and holding together the sensor device 100, with the cavity 2 being formed by the space between the membrane 1 and the transparent element 23 defined by the spacer element 24.

**Fig. 5** is a very schematic top view of a sensor device 100 as shown in Fig. 3. Shown are the clamping ring 13, the fixing ring 12, and the membrane 1. Indicated by two dashed concentric circles is the position of the reservoir 3 below the membrane 1 and cavity 2 (see Fig. 3). A reservoir 3 of annular shape assists in establishing chemically more homogeneous conditions in the cavity 2 via diffusive exchange of buffer and second dye between the cavity 2 and the reservoir 3. However, the invention is not limited to reservoirs of annular shape. In embodiments like that shown in Figs. 3 and 5, light passing through the transparent element 23 towards the cavity 2, as well as light propagating in the reverse direction, may be collimated by the annular reservoir 3 covered with the opaque layer 32.

**Fig. 6** shows a schematic cross section of an example of a membrane 1 for use in a sensor device according to the invention. The membrane 1 shown has a multilayer structure, including films 14 and 15, which for example are made of polytetrafluoroethylene (PTFE). When measuring, the film 14 is towards the medium containing the analytes to be measured. The film 15 is towards the cavity 2 (see Fig. 3, for example). Between the films 14 and 15 a mesh 16 is provided, for example made of steel or plastic. The mesh 16 is embedded in silicone; part of the silicone is a transparent silicone 19, containing particles 18 with the at least one first dye. Another part of the silicone is black silicone 17, for example Wacker N189; black silicone may for example also be obtained by mixing silicone with soot, graphite, or Fe₃O₄. The black silicone 17 is adjacent to the film 14, the transparent silicone 19 is adjacent to the film 15. Therefore the side of the membrane 1 where the film 14 is located is opaque. On the other hand, light can propagate into and through the transparent silicone 19 with the particles 18. The at least one first analyte and the second analyte can diffuse through the film 14, the black silicone 17 and the transparent silicone 19. At least the second analyte can also diffuse through the film 15, to enter the cavity 2. In this way the analytes can reach the respective dyes provided for measuring them. Light used in measuring, both excitation light and light emitted from or having interacted with at least one dye, cannot pass the black silicone 17 and therefore cannot enter the medium containing the analytes to be measured. The advantages of having the side of the membrane 1 towards the medium opaque, in the embodiment shown due to the black silicone 17, but not limited thereto, have already been discussed above. Instead of having the at least one first dye located at particles 18 dispersed in the transparent silicone 19, the at least one first dye could also be distributed homogeneously within the transparent silicone 19. The sides of the films 14 and 15 facing the silicone may be plasma etched to improve adhesion to the silicone.

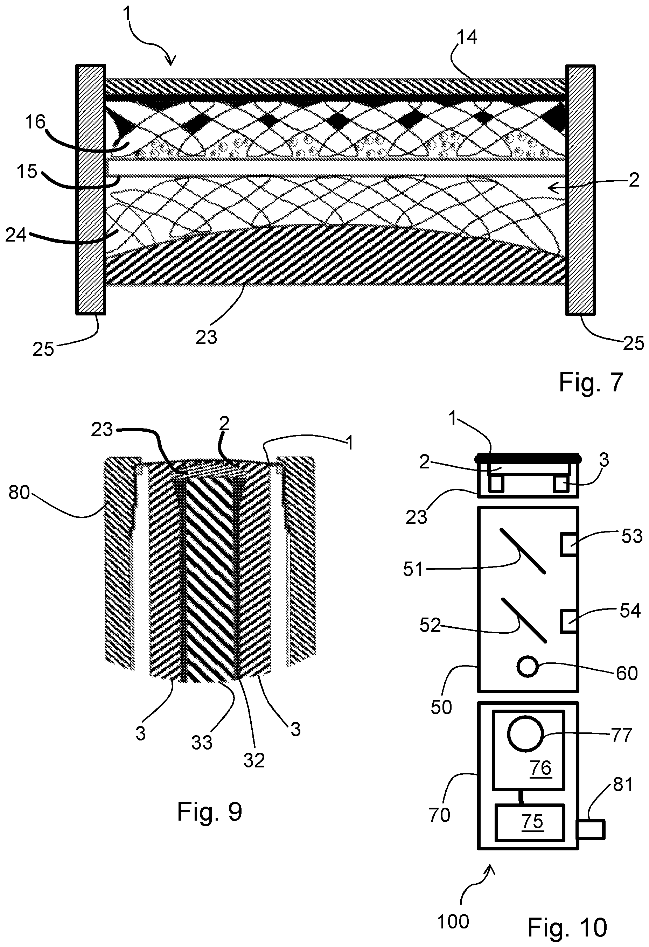

**Fig. 7** shows an assembly that can form part of a sensor device 100 as shown in Fig. 8, but can also be used as a variant of the sensor device 100 shown in Fig. 1. The assembly contains a membrane 1 of multilayer structure, as just described in the context of Fig. 6. For better establishing this context, films 14 and 15, as well as mesh 16 are indicated. The cavity 2 is formed between the membrane 1 and the transparent element 23. The cavity 2 here contains a spacer element 24, already described above. The transparent element 23 here is shaped as a lens. An opaque element 25 is provided to further limit the assembly on sides where neither the membrane 1 nor the transparent element 23 provide such a limiting function. The opaque element 25 may for example be made of stainless steel or of a plastic like polyether ether ketone (PEEK). The opaque element 25 may also be a portion of a larger component, if the assembly shown here is integrated into a larger device like the sensor device 100 shown in Fig. 8. In case the cavity 2 of the assembly shown is in diffusive contact with a reservoir (not shown here), gaps may be provided between the opaque element 25 and the transparent element 23, so that buffer-dye mixture from the reservoir can enter the cavity 2.

In a specific example, the films 14 and 15 each have a thickness of 5 µm, the mesh 16 is a steel mesh of 80 µm layer thickness with a 60 µm mesh size, the spacer element 24 also is a steel mesh of 80 µm layer thickness with a 60 µm mesh size. These dimensions are in no way limiting to the invention.

**Fig. 8** shows an embodiment of a sensor device 100 according to the invention, having an optics section 50 and a control and evaluation section 70 in a housing 80. Also shown is an assembly like that of Fig. 7, of which membrane 1 and transparent element 23 are indicated. Furthermore a waveguide 33 is provided, which establishes an optical connection between the transparent element 23 and the optics section 50. Thus, the waveguide 33 in particular can guide light from the optics section towards the at least one first dye and the second dye, via the transparent element 23, and can also guide light in the reverse direction. In the embodiment shown, the waveguide 33 passes through the reservoir 3. The waveguide 33 may for example be a glass rod. As has been discussed before, the reservoir 3 is in diffusive contact with the cavity 2 (see Fig. 7).

The optics section 50 has one dichroic mirror 51 for each first dye 11 contained in the membrane 1. To the dichroic mirror 51 there is associated a photodetector 53. Here only one dichroic mirror 51 with associated photodetector 53 is shown, brackets 110 with subscript "n" indicating that this combination of elements may be present in the sensor device 100 repeatedly, once for each first dye 11 in the membrane 1. The dichroic mirror 51 exhibits a wavelength-dependent reflectivity which is chosen such that the dichroic mirror 51 reflects light from the corresponding first dye 11 in the membrane 1 to the associated photodetector 53. The photodetector 53 outputs an electric signal indicative of the light intensity received by it. Thus the optical behaviour of the first dye 11 can be monitored.

The optics section 50 furthermore has a dichroic mirror 52 corresponding to the second dye 22 contained in the cavity 2. To the dichroic mirror 52 there is associated a photodetector 54. The dichroic mirror 52 exhibits a wavelength-dependent reflectivity which is chosen such that the dichroic mirror 52 reflects light from the corresponding second dye 22 in the cavity 2 to the associated photodetector 54. The photodetector 54 outputs an electric signal indicative of the light intensity received by it. Thus the optical behaviour of the second dye 22 can be monitored.

In the embodiment shown, the optics section 50 includes a beam splitter 55 with associated photodetector 56. The beam splitter 55 is provided to divert a portion of excitation light from a light source to the associated photodetector 56, in order to monitor the intensity of the excitation light. For several methods of measuring analytes via optical sensors, the intensity of the excitation light must be known for evaluation of the signals received from the dyes in the sensors. Usually, the beam splitter 55 is configured to direct between 0.5% and 6% of the intensity of the excitation light impinging on the beam splitter 55 to the associated photodetector 56, while letting the remaining light pass on towards the at least one first dye 11 and the second dye 22. These percentage values, however, do not constitute a limitation of the invention. The light source can be a light source external to the sensor device, with the excitation light coupled into the sensor device by suitable means. In the embodiment shown, a light source 60 is integrated into the sensor device 100. As an example of such a light source 60, in the drawing a plurality, more specifically two, light emitting diodes (LEDs) 61 are shown, which, for example, may be configured as surface-mounted devices, in this way contributing to a compact design of the sensor device 100.

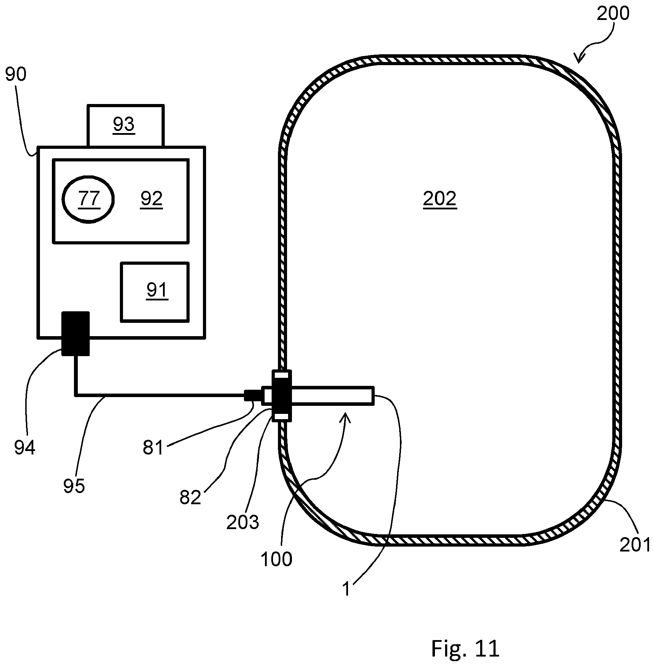

The control and evaluation section 70, in the embodiment shown, contains a printed circuit board 71 with electronic components constituting one or plural circuits for controlling the sensor device 100 and processing signals received from the photodetectors 53, 54, and 56. The printed circuit board 71 may in particular include integrated circuits or chips. At least one of these integrated circuits or chips may function as a memory device, for storing data relevant to the processing of signals received from the photodetectors 53, 54, and 56; in particular, the memory device on the printed circuit board 71 may store calibration data for the sensor device 100. One way to establish an electric connection between the photodetectors 53, 54, and 56 and the printed circuit board 71 is to mount the photodetectors 53, 54, and 56 on a printed circuit board 57 in the optics section 50, and to connect this printed circuit board 57 to the printed circuit board 71 in the control and evaluation section 70 via suitable wiring 72. Via further wiring 74, the printed circuit board 71 is connected to a plug 81. The plug 81 in the embodiment shown serves as an interface for connecting the sensor device 100 to an external device 90 (see Fig. 11). The plug 81 in particular may provide connections both for power supply of the sensor device 100 and for communication between the sensor device 100 and the external device 90. By screw element 82 the sensor device 100 can be mechanically connected to a port 203 provided in a vessel 200 (see Fig. 11), fixing the sensor device 100 in place in the vessel (200). Plug 81 is only an example of an interface, other types of interface, different from a plug, may also be used. Screw element 82 is only provided as an example of a means for mechanically connecting the sensor device 100 to a port 203 in a vessel 200, and different types of means therefor may be used.

The optics section 50 may contain further optical elements. As non-limiting examples thereof, lenses 62 and 63 are shown. For example, lens 62 may be used to collect light emitted by LEDs 61 and shape it into a beam directed towards lens 63, which focuses the light into waveguide 33. The housing 80 may contain further elements. For example, a thermistor (e.g. NTC, Pt100, Pt1000) may be provided in the housing 80 for measuring the temperature and thus determine a parameter of the ambient conditions the sensor device 100 is used in. Knowledge of the ambient conditions may contribute to the accuracy of the measurement results obtained with the sensor device 100, as, for example, the ambient conditions, in particular temperature, can affect a calibration of the sensor device 100. In embodiments, the photodetectors 53 and 54, associated with dichroic mirrors 51 and 52, respectively, may in addition be covered with filters 58, to more precisely define the wavelength range of light reaching the respective photodetector 53, 54. For more precisely defining the wavelength range of excitation light, one or more filters 64 with a respective suitable transmission may be provided for the light source 60, for example one filter for each LED 61, where the LEDs 61 can be controlled independently of each other, so that excitation light of different wavelength ranges may be used, depending on requirements of the measuring task.

The sensor device 100, including in particular the plug 81, may be sterilisable, for example in an autoclave. The plug 81, without being limited thereto, may be an Interconnex VP6 or VP8.

**Fig. 9** shows the portion of the sensor device 100 of Fig. 8 containing cavity 2 and membrane 1 in an enlarged view. The cavity 2, as also shown in Fig. 7, is formed between the membrane 1 and the transparent element 23. The spacer element 24 in the cavity 2 defines the cavity 2, as has been explained above, and establishes a diffusive contact between the cavity 2 and the reservoir 3, for countering the effects of sensor poisoning. The reservoir 3 is arranged around the waveguide 33. An opaque layer 32 is provided between the waveguide 33 and the reservoir 3.

**Fig. 10** shows a schematic representation of a sensor device 100 according to the invention. The sensor device 100 has an optics section 50 and a control and evaluation section 70 in addition to a portion including membrane 1, cavity 2, reservoir 3 and transparent element 23. Details of these elements have already been discussed above; the reservoir 3 is in diffusive contact with the cavity 2, and the membrane 1 may for example be of the type shown in Fig. 6. In the optics section 50, only light source 60, dichroic mirrors 51, 52, and respectively associated photodetectors 53 and 54 are shown. The optics section 50 may of course include further elements, for example as discussed in the context of Fig. 8. The control and evaluation section 70 contains a data processing unit 75, and a memory 76 connected to the data processing unit 75. The memory 76 at least holds calibration data 77 for the sensor device 100.

The control and evaluation section 70, the optics section 50, and the portion including membrane 1, cavity 2, reservoir 3 and transparent element 23 here are shown separate from each other, in order to emphasize the modular configuration of the embodiment of the sensor device 100 according to the invention shown here. For conducting a measurement, a control and evaluation section 70, an optics section 50, and a portion including membrane 1, cavity 2, reservoir 3 and transparent element 23 may be selected, according to their respective suitability for the specific measurement to be performed. In the resulting sensor device 100, the portion including membrane 1, cavity 2, reservoir 3 and transparent element 23 is in optical contact with the optics section 50, and the photodetectors 53, 54 are in electrical contact with the control and evaluation section 70, for example as shown in Fig. 8. The data processing unit 75 and the memory 76 may for example be implemented as integrated circuits on a printed circuit board, like the one shown in the control and evaluation section in Fig. 8. While the implementation by printed circuit boards and integrated circuits is currently preferred, the invention is not limited thereto. Also shown is an interface 81 for communication between the sensor device 100 and an external device 90 (see Fig. 11). The calibration data 77 may be transferred to the memory 76 via the interface 81.

**Fig. 11** shows a vessel 200, which may for example be a bio-reactor, but which is not limited thereto. The vessel 200 contains a medium 202, in which at least one first analyte and a second analyte are to be measured with the sensor device 100 according to the invention. For the sensor device 100, the membrane 1 is indicated. The sensor device 100 is mechanically connected to a port 203 provided in a wall 201 of the vessel 200 by means 82, like for example a screw element as shown in Fig. 8. In the example shown in Fig. 11, interface 81 of the sensor device 100, via cable 95, is connected to interface 94 of an external device 90. In the example shown, the external device 90 includes a data processing unit 91, a memory 92, and a user interface 93. The memory 92 may hold calibration data 77 for the sensor device 100, at least temporarily.

The external device 90 can for example receive signals processed by the control and evaluation section 70 (see Figs. 8 and 10) through interface 94 and operate data processing unit 91 to derive values for the concentration, or partial pressure, of the at least one first analyte and of the second analyte from the signals received. Calibration data 77 for the sensor device 100 stored in memory 92 may be used therein. The calibration data 77, or a portion thereof, may also be communicated to the sensor device 100 via interface 94, cable 95 and interface 81, and the control and evaluation section 70 of the sensor device 100 may then use these calibration data for processing signals received from photodetectors of the sensor device 100, like for example photodetectors 53, 54, and 56 shown in Fig. 8. The derived values for the concentration, or partial pressure, of the at least one first analyte and of the second analyte may then be output to a user via user interface 93, and / or stored in memory 92 or transferred to a further external device for later use.

Apart from providing a communication or data link between the external device 90 and the sensor device 100, interface 94, cable 95, and interface 81 may also be used for power supply of the sensor device 100. Alternatively, of course, power may be supplied to the sensor device 100 in a different way, for example by a separate power line. Wireless communication between the sensor device 100 and the external device 90 may also be used in embodiments. The user interface 93 can have further purposes, like for example starting, and setting parameters for, one or plural measurements to be conducted with the sensor device 100. To the extent necessary, such parameters may also be communicated to the sensor device 100, in the embodiment shown via interface 94, cable 95 and interface 81.

## Claims

1. Sensor device (100) for measuring at least one first analyte and a second analyte, the sensor device (100) comprising
a cavity (2);
a buffer (21) contained in the cavity (2);
a membrane (1), limiting the cavity (2) at least on one side of the cavity (2), wherein the membrane (1) includes at least one first dye (11) within the membrane (1), each of the at least one first dye (11) exhibiting an optical behaviour which depends on a respective first analyte;
a second dye (22) mixed with the buffer (21), the second dye (22) exhibiting an optical behaviour which depends on a pH-value in the buffer (21), wherein the pH-value in the buffer (21) depends on the second analyte;
**characterised in that** the sensor device (100) further comprising a reservoir (3) of the buffer (21) and the second dye (22), wherein the reservoir (3) is in diffusive contact with the cavity (2).

2. Sensor device (100) according to claim 1, wherein the reservoir (3) is of annular shape.

3. Sensor device (100) according to claim 1 or 2, wherein the reservoir (3) is at least partially surrounded by an opaque layer (32).

4. Sensor device (100) according to one of the previous claims, further comprising an optics section (50), the optics section (50) including a dichroic mirror (51) and an associated photodetector (53) for each of the at least one first dye (11) and also including a dichroic mirror (52) and an associated photodetector (54) for the second dye (22).

5. Sensor device (100) according to claim 4, wherein the optics section (50) further comprises a beam splitter (55) and an associated photodetector (56) for generating a reference signal for a light source (60).

6. Sensor device (100) according to claim 4 or 5, wherein an optical waveguide (33) is provided for guiding light from the optics section (50) towards the at least one first dye (11) and the second dye (22), and/or for guiding light emitted from or having interacted with at least one of the at least one first dye (11) and/or light emitted from or having interacted with the second dye (22) to the optics section (50).

7. Sensor device (100) according to one of the claims 4 to 6, further comprising a control and evaluation section (70) for controlling the optics section (50) and processing signals received from the photodetectors (53, 54, 56) of the optics section (50).

8. Sensor device (100) according to claim 7, wherein the control and evaluation section (70), the optics section (50), and the cavity (2) are contained in a common housing (80), closed on one side by the membrane (1).

9. Sensor device (100) according to one of the claims 7 or 8, wherein the optics section (50) is detachable from the control and evaluation section (70).

10. Sensor device (100) according to one of the claims 7 to 9, wherein the control and evaluation section (70) has a memory (76) for storing calibration data (77) for the sensor device (100).

11. Sensor device (100) according to one of the claims 4 to 10, wherein the cavity (2) with the membrane (1) is detachable from the optics section (50).

12. Sensor device (100) according to one of the previous claims, wherein the at least one first dye (11) in the membrane (1) is enclosed in hollow particles, or contained within pores in the membrane (1), or absorbed in carrier particles (18), or dissolved in carrier particles (18), or adsorbed to carrier particles (18), or forms particles within the membrane (1).

13. Sensor device (100) according to one of the previous claims, wherein a side of the membrane (1) facing away from the cavity (2) is opaque.

14. Sensor device (100) according to one of the previous claims, wherein the cavity (2) contains a spacer element (24), wherein the membrane (1) and the spacer element (24) are selected in such a way that a diffusion coefficient for a diffusion of the second analyte through the membrane (1) is higher by a factor of 10 to 100 than a diffusion coefficient of the buffer (21) and the second dye (22) in the cavity (2) through the spacer element (24).

## Patentansprüche

1. Sensorvorrichtung (100) zum Messen zumindest eines ersten Analyts und eines zweiten Analyts, wobei die Sensorvorrichtung (100) umfasst:
einen Hohlraum (2);
einen Puffer (21), der im Hohlraum (2) enthalten ist;
eine Membran (1), die den Hohlraum (2) auf zumindest einer Seite des Hohlraums (2) begrenzt, wobei die Membran (1) zumindest einen ersten Farbstoff (11) in der Membran (1) aufweist, wobei jeder des zumindest einen ersten Farbstoffs (11) ein optisches Verhalten, das von einem jeweiligen ersten Analyt abhängt, aufweist;
einen zweiten Farbstoff (22), der mit dem Puffer (21) gemischt ist, wobei der zweite Farbstoff (22) ein optisches Verhalten, das von einem pH-Wert im Puffer (21) abhängt, aufweist, wobei der pH-Wert im Puffer (21) vom zweiten Analyt abhängt;
**dadurch gekennzeichnet, dass**
die Sensorvorrichtung (100) ferner umfasst:
ein Reservoir (3) des Puffers (21) und des zweiten Farbstoffs (22), wobei das Reservoir (3) mit dem Hohlraum (2) in Diffusionskontakt steht.

2. Sensorvorrichtung (100) nach Anspruch 1, wobei das Reservoir (3) ringförmig ist.

3. Sensorvorrichtung (100) nach einem der Ansprüche 1 oder 2, wobei das Reservoir (3) zumindest teilweise von einer opaken Schicht (32) umgeben ist.

4. Sensorvorrichtung (100) nach einem der vorhergehenden Ansprüche, ferner aufweisend einen Optikabschnitt (50), wobei der Optikabschnitt (50) einen dichroitischen Spiegel (51) und einen zugeordneten Fotodetektor (53) für jeden des zumindest einen ersten Farbstoffs (11) aufweist und zudem einen dichroitischen Spiegel (52) und einen zugeordneten Fotodetektor (54) für den zweiten Farbstoff (22) aufweist.

5. Sensorvorrichtung (100) nach Anspruch 4, wobei der Optikabschnitt (50) ferner einen Strahlteiler (55) und einen zugeordneten Fotodetektor (56) zum Erzeugen eines Referenzsignals für eine Lichtquelle (60) aufweist.

6. Sensorvorrichtung (100) nach einem der Ansprüche 4 oder 5, wobei ein optischer Wellenleiter (33) zum Leiten von Licht vom Optikabschnitt (50) zum zumindest einen ersten Farbstoff (11) und zum zweiten Farbstoff (22) und/oder zum Leiten von Licht, das vom zumindest einen des zumindest einen ersten Farbstoffs (11) emittiert wurde oder mit diesem in Wechselwirkung trat, und/oder von Licht, das vom zweiten Farbstoff (22) emittiert wurde oder mit diesem in Wechselwirkung trat, zum Optikabschnitt (50) bereitgestellt wird.

7. Sensorvorrichtung (100) nach einem der Ansprüche 4 bis 6, ferner aufweisend einen Steuer- und Auswertungsabschnitt (70) zum Steuern des Optikabschnitts (50) und zum Verarbeiten von Signalen, die von den Fotodetektoren (53, 54, 56) des Optikabschnitts (50) empfangen werden.

8. Sensorvorrichtung (100) nach Anspruch 7, wobei der Steuer- und Auswertungsabschnitt (70), der Optikabschnitt (50) und der Hohlraum (2) in einem gemeinsamen Gehäuse (80), das auf einer Seite von der Membran (1) verschlossen ist, enthalten sind.

9. Sensorvorrichtung (100) nach einem der Ansprüche 7 oder 8, wobei der Optikabschnitt (50) vom Steuer- und Auswertungsabschnitt (70) lösbar ist.

10. Sensorvorrichtung (100) nach einem der Ansprüche 7 bis 9, wobei der Steuer- und Auswertungsabschnitt (70) einen Speicher (76) zum Speichern von Kalibrierungsdaten (77) für die Sensorvorrichtung (100) aufweist.

11. Sensorvorrichtung (100) nach einem der Ansprüche 4 bis 10, wobei der Hohlraum (2) mit der Membran (1) vom Optikabschnitt (50) lösbar ist.

12. Sensorvorrichtung (100) nach einem der vorhergehenden Ansprüche, wobei der zumindest eine erste Farbstoff (11) in der Membran (1) in Hohlpartikeln eingeschlossen ist oder in Poren in der Membran (1) enthalten ist oder in Trägerpartikeln (18) absorbiert ist oder in Trägerpartikeln (18) gelöst ist oder an Trägerpartikel (18) adsorbiert ist oder Partikel in der Membran (1) ausbildet.

13. Sensorvorrichtung (100) nach einem der vorhergehenden Ansprüche, wobei eine Seite der Membran (1), die vom Hohlraum (2) abgewandt ist, opak ist.

14. Sensorvorrichtung (100) nach einem der vorhergehenden Ansprüche, wobei der Hohlraum (2) ein Abstandshalterelement (24) aufweist, wobei die Membran (1) und das Abstandshalterelement (24) derart ausgewählt sind, dass ein Diffusionskoeffizient für eine Diffusion des zweiten Analyts durch die Membran (1) um einen Faktor von 10 bis 100 höher ist als ein Diffusionskoeffizient des Puffers (21) und des zweiten Farbstoffs (22) im Hohlraum (2) durch das Abstandshalterelement (24).

## Revendications

1. Dispositif de capteur (100) destine à mesurer au moins un premier analyte
et un second analyte, le dispositif de capteur (100) comprenant
une cavité (2);
un tampon (21) contenu dans la cavité (2);
une membrane (1) délimitant la cavité (2) au moins sur un côté de la cavité (2), la membrane (1) comprenant au moins un premier colorant (11) à l'intérieur de la membrane (1), chacun de l'au moins un premier colorant (11) ayant un comportement optique qui dépend d'un premier analyte respectif;
un second colorant (22) mélangé au tampon (21), le second colorant (22) ayant un comportement optique qui dépend d'une valeur de pH dans le tampon (21), la valeur de pH dans le tampon (21) dépendant du second analyte;
**caractérisé en ce que**
le dispositif de capteur (100) comprend en outre
un réservoir (3) du tampon (21) et du second colorant (22), le réservoir (3) étant en contact de diffusion avec la cavité (2).

2. Dispositif de capteur (100) selon la revendication 1, dans lequel le réservoir (3) est de forme annulaire.

3. Dispositif de capteur (100) selon l'une des revendications 1 ou 2, dans lequel le réservoir (3) est au moins partiellement entouré d'une couche opaque (32).

4. Dispositif de capteur (100) selon l'une des revendications précédentes, comprenant en outre une section d'optique (50), la section d'optique (50) comprenant un miroir dichroïque (51) et un photodétecteur associé (53) pour chacun de l'au moins un premier colorant (51), et comprenant en outre un miroir dichroïque (52) et un photodétecteur associé (54) pour le second colorant (22).

5. Dispositif de capteur (100) selon la revendication 4, dans lequel la section d'optique (50) comprend en outre un séparateur de faisceau (55) et un photodétecteur associé (56) pour générer un signal de référence pour une source de lumière (60).

6. Dispositif de capteur (100) selon l'une des revendications 4 ou 5, dans lequel un guide d'ondes optique (33) est prévu pour guider de la lumière depuis la section d'optique (50) vers l'au moins un premier colorant (11) et le second colorant (22), et/ou pour guider de la lumière émise par au moins un colorant de l'au moins un premier colorant (11) ou ayant interagi avec celui-ci et/ou de la lumière émise par le second colorant (22) ou ayant interagi avec celui-ci vers la section d'optique (50).

7. Dispositif de capteur (100) selon l'une des revendications 4 à 6, comprenant en outre une section de commande et d'évaluation (70) destinée à commander la section d'optique (50) et à traiter des signaux reçus par les photodétecteurs (53, 54, 56) de la section d'optique (50).

8. Dispositif de capteur (100) selon la revendication 7, dans lequel la section de commande et d'évaluation (70), la section d'optique (50) et la cavité (2) sont contenues dans un boîtier commun (80) fermé sur un côté par la membrane (1).

9. Dispositif de capteur (100) selon l'une des revendications 7 ou 8, dans lequel la section d'optique (50) peut être détachée de la section de commande et d'évaluation (70).

10. Dispositif de capteur (100) selon l'une des revendications 7 à 9, dans lequel la section de commande et d'évaluation (70) a une mémoire (76) destinée à stocker des données de calibrage (77) pour le dispositif de capteur (100).

11. Dispositif de capteur (100) selon l'une des revendications 4 à 10, dans lequel la cavité (2) ayant la membrane (1) peut être détachée de la section d'optique (50).

12. Dispositif de capteur (100) selon l'une des revendications précédentes, dans lequel l'au moins un premier colorant (11) dans la membrane (1) est enfermé dans des particules creuses ou contenu dans des pores dans la membrane (1) ou absorbé dans des particules porteuses (18) ou dissous dans des particules porteuses (18) ou adsorbé sur des particules porteuses (18) ou forme des particules dans la membrane (1).

13. Dispositif de capteur (100) selon l'une des revendications précédentes, dans lequel un côté de la membrane (1) détourné de la cavité (2) est opaque.

14. Dispositif de capteur (100) selon l'une des revendications précédentes, dans lequel la cavité (2) contient un élément d'espacement (24), la membrane (1) et l'élément d'espacement (24) étant sélectionnés de telle manière qu'un coefficient de diffusion pour une diffusion du second analyte à travers la membrane (1) soit supérieur d'un facteur de 10 à 100 à un coefficient de diffusion du tampon (21) et du second colorant (22) dans la cavité (2) à travers l'élément d'espacement (24).
